# EUROPEAN PATENT SPECIFICATION

(11) **EP 2 984 004 B1**
(45) Date of publication and mention of the grant of the patent: **29.11.2017**
(21) Application number: 14731780.4
(22) Date of filing: 10.04.2014
(51) Int. Cl.: B65D 85/804

(54) **CAPSULE AND SYSTEM FOR PREPARING BEVERAGES**
KAPSEL UND SYSTEM ZUR ZUBEREITUNG VON GETRÄNKEN
CAPSULE ET SYSTÈME POUR PRÉPARER DES BOISSONS

(30) Priority: 10.04.2013 IT MI20130568
(43) Date of publication of application: 17.02.2016
(73) Proprietor: Tuttoespresso S.r.l., 20121 Milano (IT)
(72) Inventor: DOGLIONI MAJER, Luca, I-22010 Carate Urio (IT)
(74) Representative: Mignini, Davide Giuseppe
(86) International application number: PCT/IB2014/060624
(87) International publication number: WO 2014/167526

(56) References cited:
- EP-A1- 2 489 609
- EP-A2- 2 872 421
- WO-A1-2013/046014
- WO-A2-2010/084475
- ES-U- 1 075 815

## Description

### FIELD OF THE INVENTION

The present invention relates to a capsule and a system for preparing beverages which can be used in different brewing devices, according to the preamble of claims 1 and 8 respectively. One of such capsules is disclosed by document ES 1 075 815 U.

### KNOWN PREVIOUS ART

Capsules for preparing beverages, in particular disposable capsules for preparing coffee, are used since 1930. Such capsules comprise a hollow body intended to hold an amount of at least one product, for example powdered coffee, as well as tea or herb extracts, powdered or liquid instant products. Further, the capsules comprise at least one flange-shaped portion interacting with the brewing device for preparing the desired beverage.

The brewing device comprises heating means (for example a boiler) for heating a brewing liquid, and a generally a bell-shaped housing wherein at least part of the capsule is housed to define a brewing chamber. Further, the brewing device comprises a pump, or the like, for injecting the brewing liquid into the capsule, preferably pressurized hot water, in order to extract the beverage from the product amount housed therein.

As mentioned, the brewing device comprises a housing intended to house at least part of the capsule and a second part, generally a supporting element or plate, which cooperates with the housing to form the brewing chamber wherein the capsule is arranged in fluidic seal-tight conditions during the beverage delivery. The housing and/or the supporting element of the device are movable in order to form the brewing chamber wherein the capsule is housed. The housing is designed to contact the flange provided on the capsule and, preferably one or more sealing elements arranged on the flange of the capsule, in order to realize a seal-tight engagement therewith and with the supporting element of the brewing device.

In the process of preparing beverages, the capsule is inserted in the brewing device and the brewing liquid, typically hot water under pressure, is injected into the capsule. The hot water flows through the capsule, which is usually opened by capsule-perforating means of the brewing device, for extracting the beverage from the product amount housed therein. The beverage flowing out of the capsule reaches a beverage header and finally a cup or vessel.

The housing of the brewing device, encloses at least part of the capsule and cooperates with the latter and the supporting element in order to engage part of the capsule and, in particular, the flange provided thereon in order to direct the hot water into the capsule so as to extract the beverage without causing leakages of the brewing liquid.

In fact, if the liquid leaks out, this can adversely affect the process of extracting the beverage, thus damaging taste and quality of the same. The currently used capsules comprise a substantially frusto-conical or cylindrical hollow body wherein the product amount to be used for preparing the beverage, such as powdered coffee, is housed.

Further, as mentioned, the currently used capsules comprise a substantially circular flange laterally extending from the capsule body at the lateral wall thereof. The brewing device comprises means for moving its bell-shaped housing against the flange so as to reach the position of seal-tight engagement needed during the brewing step, needed to prevent the brewing liquid from leaking out.

In known brewing devices, the seal-tight engagement between the capsule and the housing of the device is generally achieved by applying a pressure on the flange of the capsule, in other words the housing which is, as mentioned, bell-shaped so as to at least partially enclose the capsule, is pressed against the flange of the capsule, and against the supporting element of the device, that generally is a lower plate where the means for perforating the outflow wall of the capsule are placed. Thus, the flange is compressed between the housing and the lower supporting element of the brewing device, such that they realize a seal-tight engagement with one another to prevent the brewing liquid from leaking out. In fact, the leakage of the brewing liquid can cause a pressure decrease inside the capsule thereby reducing the aroma extraction, especially if coffee is the beverage to be prepared.

Furthermore, it is necessary that the flange of the capsule is not deformed during the process of preparing the beverage, in particular as a result of contacting the brewing liquid which is generally injected at high pressure and high temperature. For this reason, the flange has to be high temperature and pressure resistant, otherwise its undesired deformation would damage the fluidic seal- tight contact between the capsule flange and the brewing device of the beverage and, in particular, the housing in which the capsule is at least partially inserted.

To cope with this drawback, the flange of the capsule substantially at its outer edge, i.e. in the area of the flange farthest from the lateral wall of the capsule, is provided with a projecting element, or a thicker portion, which allows to stiffen the flange thereby preventing the latter from deforming during the process of preparing the beverage.

The projecting element allows to stiffen the flange thereby preventing it from deforming during the process of brewing the beverage which, as mentioned, takes place at high temperature and pressure conditions. Moreover, such projecting element, currently used on the flange of the capsule, also allows to prevent the capsule from being displaced from the position of seal-tight engagement between the housing of the brewing device, in particular the lower edge thereof, and the flange of the capsule itself.

One of the problems of known capsules, relates to the capability of the capsule to adapt to different brewing devices of the beverage, having the capsule housing of different shapes and sizes. In fact, sometimes the capsule that has to be ejected from the device, can jam in contact with the housing of the beverage brewing device. Document EP 2 872 421 A2, published according to Article 54 (3) EPC, discloses a capsule comprising a flange-like rim and a sealing protrusion spaced from the lateral wall the capsule and extending outwardly of said flange rim. It is an object of the present invention to solve problems and drawbacks reported in the use of the currently available capsules, and in particular to provide a capsule which ensures the proper fluidic tightness during delivering and, at the same time, which is easily adaptable to different brewing devices of the beverage while being easily insertable therein and ejectable therefrom.

Further, it is an object of the present invention to provide a capsule in which a flange can be easily stiffened in order to prevent it from deforming during the process of preparing the beverage.

### SUMMARY OF THE INVENTION

These and other objects are achieved by a capsule for preparing beverages according to claim 1. Advantageously, the function of the projecting elements is to contribute to the stiffening of the lower part of the capsule and in particular of the flange, as well as to prevent the capsule from being displaced from the position in which it is in seal-tight engagement with the housing of the brewing device during the process of brewing the beverage.

Further, being the side surface of the projecting element shaped so as to decrease, in its extension, its own distance from the vertical axis, from the bottom to top, it is possible to reduce the dimensions of the projecting element substantially at its upper part. In other words, due to such a shape of the side surface, in the upper part of the projecting element there is a substantially missing or tapered portion.

By doing so, the dimensions of the projecting element of the capsule can be reduced without adversely affecting the stiffening function of the flange.

According to an aspect of the present invention, the side surface of the at least one projecting element extends at least partially on, or beneath, at least one plane incident to the lower surface of the flange and inclined with respect to a vertical axis perpendicular to the lower surface of the flange and/ or with respect to the vertical axis of the capsule.

According to a preferred embodiment, said plane is incident to the lower surface of the flange in a point or area where the side surface is incident to the lower surface of the flange.

Advantageously, the side surface of the projecting element can be at most coincident with said plane or placed below it, so that above said plane a missing portion of the projecting element is formed, thereby reducing the dimensions thereof.

By doing so, it is possible to ensure the proper stiffening of the flange and, at the same time, to prevent the projecting element from being too bulky and therefore contacting the brewing device of the beverage and, in particular, part of the housing of the capsule.

By doing so, it is possible to prevent problems and drawbacks found in the use of currently available capsules, in which the end of the flange of the capsule, and particularly the projecting element extending therefrom, can jam in the brewing device because of the contact with the latter.

As a result, the capsule according to the present invention is adaptable to different brewing devices and, therefore, can be used with them without risking that the flange, and in particular the projecting element extending therefrom, can cause the undesired jamming of the capsule in the device, making difficult its ejection.

According to an aspect of the present invention, the at least one plane incident to the lower surface of the flange, is inclined with respect to the vertical axis perpendicular to the lower surface of the flange and/ or with respect to the vertical axis of the capsule, of an angle comprised between 5° and 50°, preferably between 15° and 40°, and even more preferably between 20° and 30°. According to a preferred embodiment, such an angle is set at 25°, that in tests carried out by the Applicant has proven to be a good compromise to obtain the stiffening of the flange of the capsule, substantially in its lower part, while reducing the dimensions of the projecting element, substantially in its upper portion, so as to prevent any problem in the use of the capsule on all known brewing devices designed for using this kind of capsule.

According to some possible embodiments of the capsule according to the present invention, the at least part of the side surface of the projecting element extending at least partially on, or beneath, the plane incident to the lower surface of the flange and inclined with respect to a vertical axis perpendicular to the lower surface of said flange and/ or with respect to said vertical axis of said capsule, is placed over the upper surface of the flange and/ or is spaced from the lower surface of the flange of a distance of at least 0,1 mm, and preferably at least 0,2 mm, along the vertical axis of the capsule.

By doing so, it is possible to effectively stiffen the flange while reducing the dimensions of its upper part, and in particular of the projecting element extending therefrom.

The present invention also relates to a system for preparing beverages comprising a capsule of the above described type, according to claim 8.

### BRIEF DESCRIPTION OF THE FIGURES

Additional characteristics and advantages of the present invention will be more evident from the following description, made for illustration purposes and without limitation, with reference to the attached drawings, wherein:
- figure 1 shows a perspective view of the capsule according to the present invention;
- figure 2 shows a radial sectional view, i.e. along a plane passing through the vertical axis A of the capsule and radially extending therefrom, of the capsule according to the invention, and figure 2A shows an enlarged detail Y of the flange of the capsule of figure 2;
- figure 3 shows a further possible embodiment of the capsule according to the present invention, in a view similar to that of Figure 2A;
- figure 4 shows a perspective view of a brewing device of the beverage wherein the capsule according to the present invention can be used.

### DETAILED DESCRIPTION OF SOME EMBODIMENTS OF THE PRESENT INVENTION

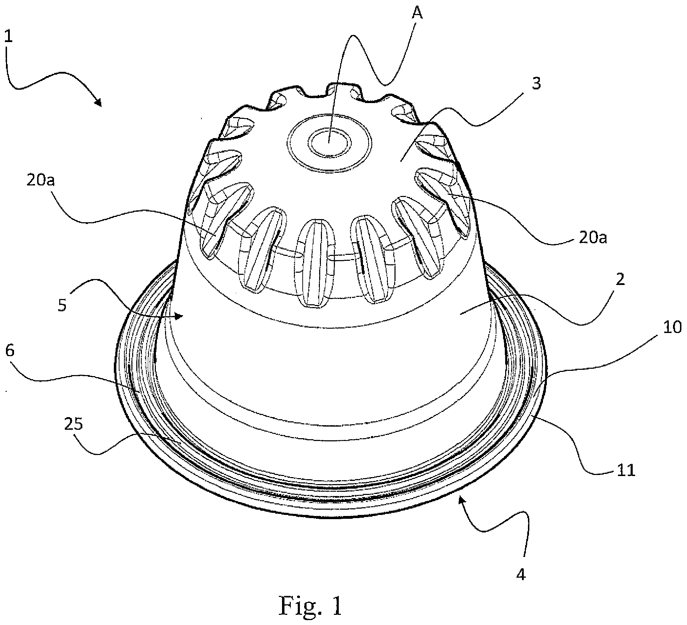

Figures 1 - 3 show an embodiment of the capsule 1 according to the present invention, which can be used for preparing beverages, such as coffees, teas, hot and cold beverages, or other edible liquids, from an amount of a product (ingredient) in solid or liquid form that is housed within the capsule.

Preferably, the amount of product is in form of powder, such as powdered coffee, from which the beverage is extracted through a brewing liquid, preferably hot water under pressure, which is injected into the capsule.

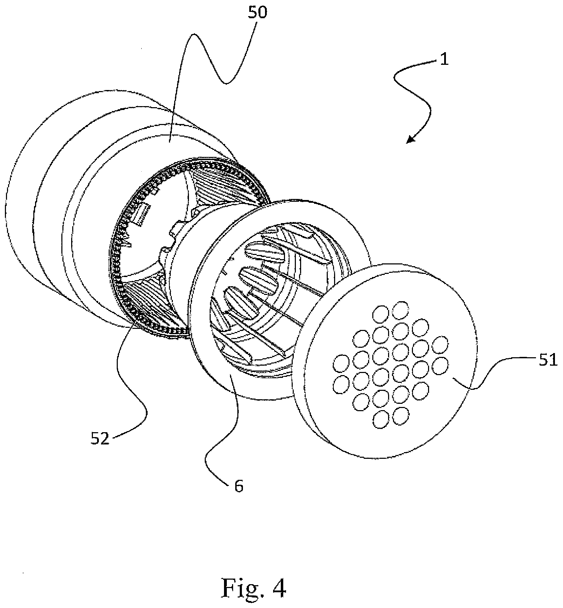

Indeed, as schematically shown in Figure 4, the capsule according to the invention is used in a brewing device of the beverage provided with a housing 50, intended to accommodate at least part of the capsule during the process of preparing beverages. In other words, the capsule 1 is at least partially inserted into the housing 50, that is shaped so as to fit to the capsule to allow it to be inserted/ pulled in/out of the housing, respectively at the beginning and at the end of the process of preparing the beverage.

The housing 50 cooperates with a lower supporting element or plate 51 which supports the capsule from below.

The supporting element 51 generally is a fixed element whereas the housing 50 is movable. In fact, during the use, the housing 50 is moved towards the supporting element 51 of the brewing device in such a way that part of the capsule 1 and, in particular as it will be explained below, a flange 6 thereof, is compressed between the lower edge 52 of the housing 51 and the supporting element 51.

Further, the brewing device is provided with means (not shown) for supplying the brewing liquid, preferably hot water under pressure, inside the capsule.

During the preparation of the beverage, the capsule 1 is enclosed between the housing 50 and the supporting element 51 of the device for brewing beverages, which further comprises known means to control the relative movement between the housing 50 and the supporting element 51, so as to allow to insert the capsule between them. As mentioned, the housing 50 applies a pressure at least on part of the capsule, and preferably on its flange 6 which, as will be seen, laterally extends from the lateral wall of the capsule to determine the seal-tight engagement of the housing with the capsule.

It should be noted that, although reference has been made to this type of device for brewing beverages, the capsule according to the present invention is not intended to be used only with it.

As shown in figures, the capsule 1 according to the invention comprises a lateral wall 2, an upper wall 3 adapted to allow the injection of a brewing liquid and a lower wall 4 for the outflow of the beverage which form a hollow body 5 wherein the product amount to be used for preparing the beverage is housed.

The capsule can be made of thermoplastic materials, such as PE or PP polymers, or degradable plastics, or the so called biomaterials, such as PLA.

Further, the capsule can be realized by injection molding or thermoforming, and it can be provided as well with a layer acting as a barrier against the passage of oxygen and gas.

The capsule 1, and in particular the hollow body 5, has a substantially cylindrical or frusto-conical shape, with a vertical axis A corresponding to a center line along which the capsule extends. According to some possible embodiments, the vertical axis A also coincides with a rotation axis of symmetry of the capsule. The lateral wall 2 of the capsule 1 has circular cross section when viewed in planes perpendicular to the vertical axis A of the capsule.

In the embodiment shown in figures, the lateral wall 2 is not parallel to the vertical axis A and, as a consequence, the hollow body 5 has a substantially frusto-conical shape, i.e. the circular section of the lateral wall 2 along planes perpendicular to the vertical axis A is not constant. However, according to further possible embodiments, the section of the lateral wall 2 can be constant circular so as to generate a substantially cylindrical hollow body 5.

The bottom of the hollow body 5 is closed by the substantially flat lower wall 4, and its top is closed by the upper wall 3 which allows the injection of the brewing liquid for brewing the product amount held in the capsule. In the embodiment shown in figures, the lower wall 4 is made of a different material with respect to the capsule material which, as mentioned, is preferably made of a plastic material, for example a sheet or membrane made of an impermeable material as a thin sheet comprising aluminum. This is already currently used in capsules for producing beverages.

The so formed lower wall 4 allows the outflow of the beverage as a result of the perforation of the membrane or sheet constituting it, that is usually carried out by suitable perforating means the brewing device, and particularly the supporting element 51 of the same, is provided with.

Despite this, it should be noted that according to further possible embodiments, the lower wall 4 may be constituted by a separate element that is connected to the lower portion of the body of the capsule 5 in order to close it like a lid.

As regards the upper wall 3, which as mentioned is adapted to the injection of the brewing liquid, it is preferably constituted by a closed wall which has to be perforated by suitable means generally arranged on the brewing device of the beverage, and in particular in the housing 52. Usually, the perforating means of the brewing device of the beverage comprise one or more blades arranged inside the housing 50 wherein the capsule is inserted, intended to cause the perforation of at least part of the upper wall 3 of the capsule itself.

The upper wall 3 can have different shapes, in particular it can be a flat surface, that is perpendicular to the vertical axis A of the capsules, or it can be substantially dome-shaped, as in the embodiment illustrated in the figures.

In addition, the capsule can be provided with stiffening means 20 of the upper wall 3 and/or the lateral wall 2, in such a way that it can be effectively perforated, in order to allow to properly inject the brewing liquid inside the hollow body 5 to prevent the beverage from being delivered defectively or with an unsatisfactory quality.

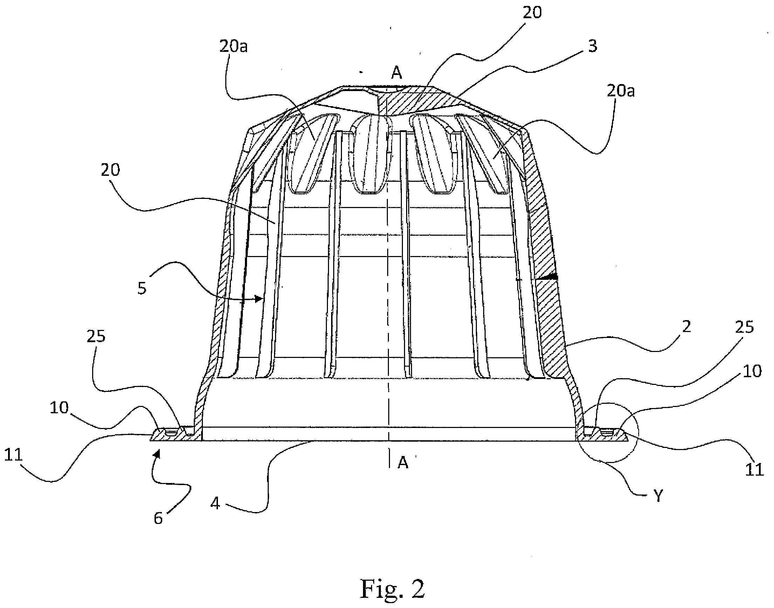

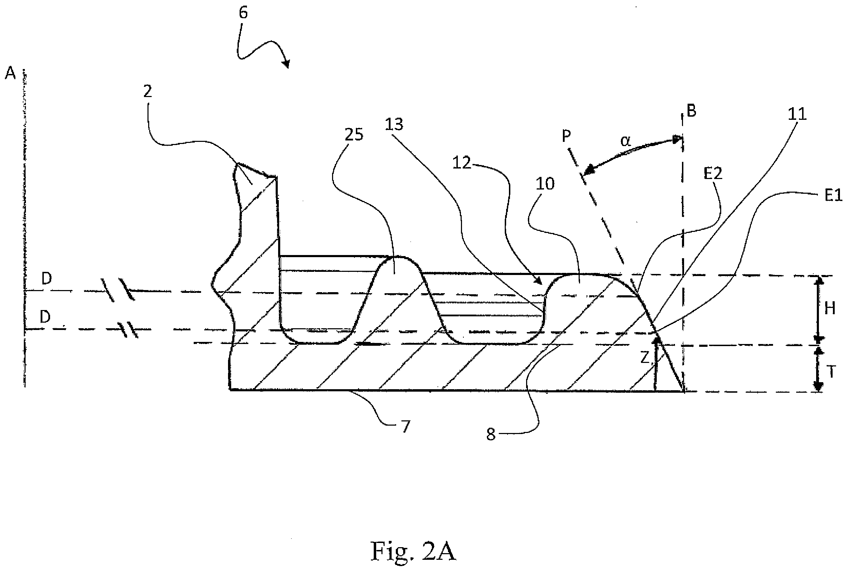

As shown in the sectional view of figure 2, the stiffening means can comprise thin ribs extending on the upper wall 3 and/or on the lateral wall 2 and comprising, as in the illustrated embodiment, a plurality of recessed portions 20a, i.e. which are indented inside the hollow body 5 of the capsule in order to stiffen the wall thereof. Said recessed portions 20a can be arranged only at the upper wall 3 or, as in the embodiment shown in figure 1, they can be arranged both on the upper wall 3 and the lateral wall 2.

The capsule 1 according to the present invention further comprises at least one flange 6 extending laterally from the lateral wall 2 of the hollow body of the capsule. The flange 6 is defined by at least one lower surface 7 and at least one upper surface 8 that, in the embodiment shown in figures, lie on planes substantially perpendicular to the vertical axis A of the capsule. Obviously, the lower and upper surfaces 7 and 8 of the flange 6 can also be arranged so as to be substantially inclined with respect to the vertical axis A.

It should be further noted that, preferably, the lower and upper surfaces 7 and 8 of the capsule are substantially parallel to one another although, even in this case, they can also be inclined with respect to one another, according to further possible embodiments not shown in the attached figures.

In the embodiment shown in figures, and as can be seen in the view of figures 2 and 2A, the thickness T of the flange 6, i.e. the distance between the lower 7 and the upper 8 surfaces of the same, is 0,4 mm. However, obviously, different thicknesses T of the flange 6 can be used. As previously mentioned, the section of the lateral wall 2 of the capsule is substantially circular, and therefore the section of the flange 6 extending therefrom is substantially circular too. The flange 6 circumferentially extends from the lower portion of the lateral wall 2 of the capsule, thus forming a perimetrical projection of the capsule itself.

The flange 6 of the capsule 1 comprises at least one projecting element 10 at its own end, i.e. substantially at in its own farthest part with respect to the lateral wall 2 of the capsule or from vertical axis A of the same. Preferably, the projecting element extends from the upper surface 8 of the flange. As previously said, the function of such projecting element is to contribute to the stiffening of the lower part of the capsule and in particular of the flange 6, as well as to prevent the capsule from being displaced from the position in which it is in seal-tight engagement with the housing of the brewing device during the process of brewing the beverage.

In fact, during the process of preparing the beverage and, in particular, when the capsule is inserted into the brewing device of the beverage, the housing 50 of the device, and in particular its lower edge 52 are placed in contact with at least part of the flange 6 in order to realize the seal-tight engagement therewith, so as to prevent any leakage of the brewing liquid that would adversely affect the final quality of the extracted beverage.

Therefore, the projecting element 10 allows to ensure the proper stiffening of the flange 6 which could be deformed by the pressurized liquid as well as by the high temperature of the same, thereby causing unwanted leakages.

It should be noted that the projecting element 10 can also comprise a thicker portion of the flange, i.e. in some possible embodiments, the projecting element 10 can be an element causing the increase of the thickness of the flange 6 at the end thereof.

In the embodiment shown in figures, the projecting element 10 extends upward from the surface of the flange 6 of a height H of 0.6 mm, measured from the upper surface 8 of the flange 6. Obviously, in additional embodiments, different values of the height H of the projecting element 10 can clearly be used.

Moreover, according to different possible embodiments, only in some parts of the flange there can be the projecting element 10, i.e. it can extends at the end of the flange in a discontinuous manner. Alternatively, according to a preferred embodiment and as shown in the perspective view of figure 1, the projecting element 10 extends in a continuous manner along the entire circumferential length of the flange 6, substantially at its end.

Further, as it can be seen in the sectional view of figures 2 and 2A, the projecting element 10 comprises a side surface 11 that is incident to the lower surface 7 of the flange 6.

Therefore, the side surface 11 of the projecting element 10 also extends laterally at the flange 6 from which the projecting element 10 extends.

As it can be seen in the radial sectional view of figures 2 and 2A, i.e. a sectional view along a plane passing through the vertical axis A, the outer side surface 11 of the projecting element 10 extends at least in part decreasing its own distance D with respect to the vertical axis A of the capsule.

In detail, the side surface 11 in its extension substantially from the bottom to the top, or substantially from the bottom surface 7 of the flange 6 upwards, decreases its own distance D from the axis of the capsule.

In the sectional view of Figure 2A, the point E1 on which the side surface 11 passes and placed closer to the bottom surface 7 of the flange 6, is placed at a distance D from the vertical axis A greater than the distance D from the vertical axis where the point E2 is placed, on which passes the side surface 11 that is placed at a greater distance from the bottom surface 7 of the flange 6.

In other words, the side surface 11 extends from the bottom to the top connecting, along its extension, points that are located at a distance D which gradually decrease with respect to the vertical axis A of the capsule.

Obviously, it should be noted that in the radial sectional view of figures 2 and 2A, the side surface 11 is shown as a line.

Advantageously, as the distance from the lower wall 4 of the capsule increases, it is possible to progressively reduce the overall dimensions of the projecting element 10, thanks to the lateral surface 11 of the projecting element 10 which, during its extension, decreases its own distance D from the vertical axis A. In other words, due to such a shape of the side surface 11, in the upper part of the projecting element 10 there is a substantially missing or tapered part.

By doing so, it is possible to ensure the proper stiffening of the flange 6 and, at the same time, to prevent the projecting element 10 from being too bulky and therefore from contacting the brewing device of the beverage, and in particular part of the housing 50 of the capsule. By doing so it is possible to prevent problems and drawbacks found in the use of currently available capsules, in which the end of the flange 6 of the capsule, and particularly the projecting element 10 extending therefrom, can jam in the brewing device because of the undesired contact with the latter.

In more detail, according to a preferred embodiment the side surface 11 of the at least one projecting element 10 extends at least partially on, or beneath, at least one plane P incident to the lower surface 7 of the flange 6 and inclined with respect to a vertical axis B perpendicular to the lower surface 7 of the flange 6 and/ or with respect to the vertical axis A of the capsule.

It should be noted that, in the embodiment shown in figures, the lower surface 7 of the flange is perpendicular with respect to the axis A, so that the reference vertical axis B and the vertical axis A of the capsule are parallel to one another and they can be similarly used as reference.

In detail, the expression "the side surface 11 of the projecting element 10 extends at least in part on at least one plane P" means that the side surface 11 coincides with (lies on) the plane P which is incident to the lower surface 7 of the flange 6 and inclined with respect to a vertical axis B perpendicular to the lower surface 7 of the flange 6 and/or with respect to the vertical axis A of the capsule.

In the embodiment shown in figures, and as better shown in the radial section of figure 2, at least part of the side surface 11 coincides with the plane P which is incident to the lower surface 7 of the flange 6 and inclined with respect to a vertical axis B perpendicular to the lower surface 7 of the flange 6 and/or with respect to the vertical axis A of the capsule.

In particular, in the embodiment shown in the radial sectional view 2, the side surface 11 at least partially lies on the plane P and its upper portion has a rounded shape to connect to the upper part of the projecting element.

Also, as mentioned, according to further embodiments of the invention, the side surface 11 of the at least one projecting element 10 extends at least in part beneath the plane P.

In other words, the side surface 11 does not exceed the geometrical limit determined by the plane P which is, as mentioned, incident to the lower surface 7 of the flange 6 and inclined with respect to a vertical axis B perpendicular to the lower surface 7 of the flange 6 and/or with respect to the vertical axis A of the capsule.

By doing so, the side surface 11 of the projecting element 10 can be at most coincident with the plane P, or arranged below the latter, so that over the plane P a missing portion of the projecting element is formed, thereby reducing its overall dimensions.

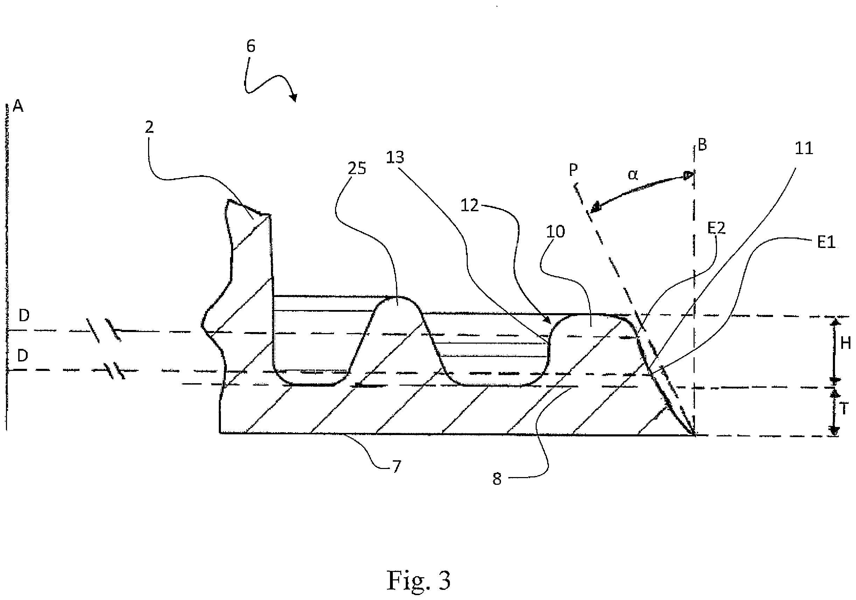

Figure 3 shows a radial section, similar to that of figure 2A, of a possible embodiment where the outer side surface 11, having a concave portion, is at least partially placed beneath the plane P. Obviously, the side surface 11 can have different shapes, as long as it lies on, or remains beneath said plane P, in order to reduce the overall dimensions of the projecting element 10.

It should be noted that, preferably, the at least one plane P is incident to the lower surface 7 of the flange 6 in the point, or area, where the side surface 11 is incident to the lower surface 7 of the flange 6, see in this regard the sectional view of Figure 2.

It should be noted that in order to reach a good compromise between an effective stiffening of the flange, by means of the projecting element 10, and its lateral dimensions, the inclination angle α of the plane P on which it lies, or beneath which it extends, the side surface 11 of the projecting element 10 has to be properly selected.

In detail, the at least one plane P which is incident to the lower surface 7 of the flange, is inclined with respect to the vertical axis B perpendicular to the lower surface 7 of the flange and/ or with respect to the vertical axis A of the capsule, of an angle comprised between 5° and 50°, preferably between 15° and 40°, and even more preferably between 20° and 30°. In the embodiment shown in figures, the angle is equal to 25° that, in tests carried out by the Applicant, has proven to be a good compromise to obtain the stiffening of the flange 6 of the capsule, while reducing the dimensions of the projecting element 10.

It should be noted that the part of the side surface 11 of the projecting element 10 which extends decreasing its own distance D with respect to the vertical axis A of the capsule, and which extends at least in part on, or beneath a plane P, generally comprises an upper part of the projecting element 10 and it not necessarily includes the part of the lateral surface next to the lower surface 7 of the flange 6. In fact, as mentioned, the possibility of reducing the dimensions substantially of the upper part of the projecting element 10 is advantageous in order to achieve anyway an effective stiffening of the flange 6.

According to some possible embodiments of the capsule according to the present invention, the at least part of the side surface 11 of the projecting element 10 extending at least in part on, or beneath the plane P, is placed over the upper surface 8 of the flange 6 and/or is spaced from the lower surface 7 of the flange 6 along the vertical axis A of a distance Z of at least 0.1 mm, and preferably 0.2 mm.

By doing so, the portion of the side surface which decreases its distance from the vertical axis A, or lies on or beneath the plane P, is placed at a fixed distance from the upper surface 7 of the flange 6 such that its stiffening is not adversely affected, while allowing the lateral dimension of the projecting element 10 to be reduced substantially in its upper part.

In more detail, the distance Z is measured between the lower surface 7 of the flange 6 and the first point or area of the side surface 11 extending at least in part on, or beneath, the plane P.

It should be noted that the distance Z from the lower surface 7 of the flange 6 is measured along the vertical axis A, i.e. in the direction of the vertical axis A. Further, the distance Z is preferably measured from the incidence point, or area of the side surface 11 with the lower surface 7 of the flange 6.

It should be noted that the side surface 11 placed beneath the distance Z from the lower surface of the flange, i.e. the part of the side surface 11 which is incident to the lower surface of the flange and extends up to the upper surface 8 of the flange 6 and/or up to a distance Z from the lower surface 7 of the flange 6, can take different shapes.

The capsule 1 according to the present invention further comprises at least one sealing element 25 projecting from the flange 6 comprised between the lateral wall 2 of the capsule 1 and the projecting element 10 disposed substantially at the end of the flange 6.

The sealing element 25 is designed to be at least in part engaged by the housing 50 of the brewing device of the beverage , and in particular by its lower edge, in order to realize a fluidic seal-tight engagement.

According to a preferred embodiment shown in the figures, the sealing element 25 has a triangular shape in a radial sectional view, even though, of course, different shapes of the same can be used.

Another aspect of the present invention relates to a system for preparing beverages comprising a capsule 1 of the above described type, and a brewing device of the beverage comprising a housing 50 to enclose at least part of the capsule. Moreover, the housing 50 comprises a lower edge 52 adapted to contact the flange 6 of the capsule in the space between the lateral wall 2 of the capsule and the projecting element 10 projecting from the flange 6 in order to realize a seal-tight engagement with the capsule.

Advantageously, thanks to the shape of the side surface 11 of the projecting element 10 which is incident to the lower surface 7 of the flange 6 and extends at least partially decreasing its own distance D with respect to the vertical axis A of the capsule, the housing 50 of the device remains above the side surface 11 of the projecting element 10 without contacting it.

In more detail, in the embodiment wherein the side surface 11 of the projecting element 10 of the capsule extends at least in part on, or beneath at least one plane P incident to the lower surface 7 of the flange 6 and inclined with respect to the vertical axis B perpendicular to the lower surface 7 of the flange 6 and/or with respect to the vertical axis A of the capsule, advantageously the housing 50 of the device remains over said plane P when the lower edge 52 of the housing 50 contacts the flange in the space comprised between the lateral wall 2 of the capsule and the projecting element 10 in order to realize a seal-tight engagement with the capsule.

Advantageously, the upper portion of the projecting element having reduced dimensions, as mentioned, does not contact the housing of the brewing device which, as mentioned, remains over the plane P over, or beneath which at least part of the side surface 11 of the projecting element extends.

Obviously, in the embodiment of the capsule wherein its flange 6 is further provided with at least one projecting sealing element 25 comprised between the lateral wall of the capsule and the projecting element 10 arranged at the end of the flange, during the use and due to the insertion of the capsule into the brewing device, the lower edge 52 of the housing contacts the projecting sealing element 25 in order to realize a seal-tight engagement with the capsule, without interacting with the projecting element 10 of the flange 6. According to the present invention the projecting element 10 has an inner side surface 12 having a shape different from the outer side surface 11. More particularly, the inner side surface 12 of the projecting element 10 is a curved surface having at least one flex point 13; the flex point 13 is spaced from the upper surface 8 of the flange 6 of a length at least equal to a quarter (25%) of the height H of said projecting part 10, preferably between one-third and two-thirds of H. In this way, the edge 10 is provided with the required stiffness, even if the thickness of the element 10 at the outer lateral surface 11 is reduced.

## Claims

1. Capsule (1) for preparing beverages comprising at least one lateral wall (2)) having a substantially circular cross section, at least one upper wall (3), for the injection of a brewing liquid, and at least one lower wall (4) for the outflow of said beverage which define a hollow body (5) for housing one or more ingredients for preparing said beverage, said capsule further comprising at least one vertical axis (A) and at least one flange (6) having a substantially circular cross section and extending laterally from said lateral wall (2) of the hollow body (5) of the capsule, said at least one flange being defined by at least one upper surface (8) and at least one lower surface (7), said flange comprising, at its own circumferential end, at least one element (10) projecting with respect to said upper surface (8) of said flange, said at least one projecting element (10) comprises a side surface (11), incident to said lower surface (7) of said flange, extending at least partially decreasing its own distance (D) from bottom to top with respect to said vertical axis (A) of the capsule and said at least one projecting element (10) is provided with an inner side surface (12) which has a shape different from the shape of said outer side surface (11), **characterized in that** said inner side surface (12) is curved and is provided with at least one flex point (13) which is spaced from the upper surface (8) of the flange of a length at least equal to a quarter of the height (H) of said projecting part (10).

2. Capsule according to claim 1, **characterized in that** said side surface (11) of said at least one projecting element (10) extends at least partially on, or beneath, at least one plane (P) incident to the lower surface (7) of said flange and inclined with respect to a vertical axis (B) perpendicular to the lower surface (7) of said flange and/ or with respect to said vertical axis (A) of said capsule.

3. Capsule according to claim 2, wherein said at least one plane (P) is incident to the lower surface (7) of said flange (6) in the incidence point, or incidence area, of said side surface (11) with said lower surface (7) of said flange.

4. Capsule according to claim 2 or 3, wherein said at least one plane (P), which is incident to the lower surface (7) of said flange (6), is inclined with respect to said vertical axis (B) perpendicular to the lower surface of said flange and/ or with respect to said vertical axis (A) of said capsule, of an angle (α) comprised between 5° and 50°, preferably between 15° and 40°, and even more preferably between 20° and 30°.

5. Capsule according to any one of the claims 2 to 4, wherein said at least part of said side surface (11) of said projecting element (10) extending at least partially on, or beneath, at least one plane (P) incident to the lower surface (7) of said flange (6) and inclined with respect to a vertical axis (B) perpendicular to the lower surface of said flange and/ or with respect to said vertical axis (A) of said capsule, is placed over said upper surface (8) of said flange (6) and/ or is spaced from said lower surface (7) of said flange of a distance (Z) of at least 0.1 mm, and preferably at least 0.2 mm, along the direction of said vertical axis (A) of said capsule.

6. Capsule according to claim 5, wherein said distance (Z) is measured from the incidence point or incidence area of said side surface (11) with said lower surface (7) of said flange (6).

7. Capsule according to any one of the preceding claims, **characterized by** comprising at least one sealing element (25) projecting from said flange, said projecting sealing element being comprised between said lateral wall (2) of said capsule and said projecting element (10), the latter being disposed substantially at the end of said flange (6).

8. System for preparing beverages comprising at least one capsule (1) according to any one of the preceding claims and at least one brewing device for beverage preparation comprising a housing (50) for enclosing at least part of said capsule, wherein said housing comprises a lower edge (52) adapted to contact said flange (6) in the space between said lateral main request wall (2) of the capsule and said element (10) projecting from said flange (6) in order to realize a seal-tight engagement with the capsule, said housing (50) of said device remaining over said side surface (11) of said projecting element (10) of said capsule incident to said lower surface (7) of said flange (6) and extending at least partially decreasing its distance (D) from bottom to top with respect to said vertical axis (A) of said capsule, and said at least one projecting element (10) is provided with an inner side surface (12) which has a shape different from the shape of said outer side surface (11), **characterized in that** said inner side surface (12) is curved and is provided with at least one flex point (13) which is spaced from the upper surface (8) of the flange of a length at least equal to a quarter of the height (H) of said projecting part (10).

9. System according to claim 8, wherein the side surface (11) of said at least one projecting element (10) of said capsule extends at least partially on, or beneath, at least one plane (P) incident to the lower surface (7) of said flange (6) and inclined with respect to a vertical axis (B) perpendicular to the lower surface (7) of said flange and/ or with respect to said vertical axis (A) of said capsule, said housing (50) of said brewing device remaining over said at least one plane (P) incident to the lower surface of said flange and inclined with respect to a vertical axis perpendicular to the lower surface of said flange and/ or with respect to said vertical axis of said capsule, when said at least one lower edge (52) of said housing (50) contacts said flange (6) in the space between said lateral wall (2) of the capsule and said element (10) projecting from said flange in order to realize a seal-tight engagement with the capsule.

10. System according to claim 8 or 9, wherein said capsule comprises at least one sealing element (25) projecting from said flange (6) comprised in the space between said lateral wall (2) of said capsule and said projecting element (10), the latter being substantially arranged at the end of said flange, said at least one lower edge (52) of said housing (50) contacting said at least one sealing element (25) projecting from said flange in order to realize a seal-tight engagement with the capsule.

## Patentansprüche

1. Kapsel (1) zur Herstellung von Getränken umfassend mindestens eine Seitenwand (2) mit einem im Wesentlichen kreisförmigen Querschnitt, mindestens eine obere Wand (3) zum Einspritzen einer Brühflüssigkeit und mindestens eine untere Wand (4) für den Abfluss des Getränks, welche einen Hohlkörper (5) zum Aufnehmen eines oder mehrerer Bestandteile zur Herstellung des Getränks definieren, wobei die Kapsel ferner mindestens eine vertikale Achse (A) und mindestens einen Flansch (6) mit einem im Wesentlichen kreisförmigen Querschnitt aufweist, der sich seitlich von der Seitenwand (2) des Hohlraums (5) der Kapsel erstreckt, wobei der mindestens eine Flansch durch mindestens eine obere Fläche (8) und mindestens eine untere Fläche (7) definiert ist, wobei der Flansch an seinem eigenen umlaufenden Ende mindestens ein Element (10) aufweist, das in Bezug auf die obere Fläche (8) des Flansches vorsteht, wobei das mindestens eine vorstehende Element (10) eine Seitenfläche (11) aufweist, die auf die untere Fläche (7) des Flansches auftrifft, sich zumindest teilweise erstreckt unter Verringerung des eigenen Abstandes (D) von unten nach oben in Bezug auf die vertikalen Achse (A) der Kapsel und wobei das mindestens eine vorstehende Element (10) mit einer inneren Seitenfläche (12) versehen ist, die eine von der Form der äußeren Seitenfläche (11) verschiedene Form aufweist, **dadurch gekennzeichnet, dass** die innere Seitenfläche (12) gekrümmt ist und mit mindestens einem Wendepunkt (13) versehen ist, der von der oberen Fläche (8) des Flansches mit einer Länge von mindestens gleich einem Viertel der Höhe (H) des vorstehenden Teils (10) beabstandet ist.

2. Kapsel nach Anspruch 1, **dadurch gekennzeichnet, dass** die Seitenfläche (11) des mindestens einen vorstehenden Elements (10) zumindest teilweise auf oder unterhalb mindestens einer auf die untere Fläche (7) des Flanches auftreffenden Ebene (P) verläuft und in Bezug auf eine vertikale Achse (B) senkrecht zur unteren Fläche (7) des Flansches und / oder in Bezug auf die vertikale Achse (A) der Kapsel geneigt ist.

3. Kapsel nach Anspruch 2, wobei die mindestens eine Ebene (P) auf die untere Fläche (7) des Flansches (6) in der Einfallstelle oder dem Einfallsbereich der Seitenfläche (11) mit der unteren Fläche (7) des Flansches auftrifft.

4. Kapsel nach Anspruch 2 oder 3, wobei die mindestens eine Ebene (P), die auf die untere Fläche (7) des Flansches (6) auftrifft, in Bezug auf die vertikale Achse (B) senkrecht zur unteren Fläche des Flansches und / oder in Bezug auf die vertikale Achse (A) der Kapsel mit einem Winkel (α) geneigt ist, der zwischen 5° und 50°, vorzugsweise zwischen 15° und 40° und noch bevorzugter zwischen 20° und 30° liegt.

5. Kapsel nach einem der Ansprüche 2 bis 4, wobei der mindestens eine Teil der Seitenfläche (11) des vorstehenden Elements (10), der sich zumindest teilweise auf oder unterhalb mindestens einer Ebene (P) erstreckt, die auf die die untere Fläche (7) des Flansches (6) auftrifft und in Bezug auf eine vertikale Achse (B) senkrecht zur unteren Fläche des Flansches und / oder in Bezug auf die vertikale Achse (A) der Kapsel geneigt ist, über die obere Fläche (8) des Flansches (6) platziert ist und / oder von der unteren Fläche (7) des Flansches mit einem Abstand (Z) von mindestens 0,1 mm und vorzugsweise von mindestens 0,2 mm entlang der Richtung der vertikalen Achse (A) der Kapsel beabstandet ist.

6. Kapsel nach Anspruch 5, wobei der Abstand (Z) von dem Einfallspunkt oder der Einfallsfläche der Seitenfläche (11) mit der Unterseite (7) des Flansches (6) gemessen wird.

7. Kapsel nach einem der vorhergehenden Ansprüche, **dadurch gekennzeichnet, dass** sie mindestens ein von dem Flansch abstehendes Dichtelement (25) aufweist, wobei das vorstehende Dichtelement zwischen der Seitenwand (2) der Kapsel und dem vorstehenden Element (10) umfasst ist, wobei letzteres im Wesentlichen am Ende des Flansches (6) angeordnet ist.

8. System zur Herstellung von Getränken, umfassend mindestens eine Kapsel (1) nach einem der vorhergehenden Ansprüche und mindestens eine Brühvorrichtung zur Getränkezubereitung, umfassend ein Gehäuse (50) zum Umschließen mindestens eines Teils der Kapsel, wobei das Gehäuse eine untere Kante (52) umfasst, die so ausgebildet ist, dass sie den Flansch (6) in dem Raum zwischen der Seitenwand (2) der Kapsel und dem von dem Flansch (6) vorstehenden Element (10) berührt, um einen dichtenden Eingriff mit der Kapsel zu realisieren, wobei das Gehäuse (50) der Vorrichtung über der Seitenfläche (11) des vorstehenden Elements (10) der Kapsel verbleibt, die auf die untere Fläche (7) des Flansches (6) auftrifft und sich zumindest teilweise erstreckt unter Verringerung des eigenen Abstandes (D) von unten nach oben in Bezug auf die vertikalen Achse (A) der Kapsel und wobei das mindestens eine vorstehende Element (10) mit einer inneren Seitenfläche (12) versehen ist, die eine von der Form der äußeren Seitenfläche (11) verschiedene Form aufweist, **dadurch gekennzeichnet, dass** die innere Seitenfläche (12) gekrümmt ist und mit mindestens einem Wendepunkt (13) versehen ist, der von der oberen Fläche (8) des Flansches mit einer Länge von mindestens gleich einem Viertel der Höhe (H) des vorstehenden Teils (10) beabstandet ist.

9. System nach Anspruch 8, wobei sich die Seitenfläche (11) des mindestens einen vorstehenden Elements (10) der Kapsel zumindest teilweise auf oder unterhalb mindestens einer auf die Unterseite (7) auftreffenden Ebene (P) des Flansches (6) erstreckt und in Bezug auf eine vertikale Achse (B) senkrecht zur unteren Fläche (7) des Flansches und / oder in Bezug auf die vertikale Achse (A) der Kapsel geneigt ist, wobei das Gehäuse (50) der Brühvorrichtung über der mindestens einen Ebene (P) verbleibt, die auf die untere Oberfläche des Flansches auftrifft und in Bezug auf eine vertikale Achse senkrecht zur unteren Fläche des Flansches und / oder in Bezug auf die vertikale Achse der Kapsel geneigt ist, wenn der mindestens eine untere Rand (52) des Gehäuses (50) den Flansch (6) in dem Raum zwischen der Seitenwand (2) der Kapsel und dem aus dem Flansch herausragenden Element (10) berührt, um einen dichten Eingriff mit der Kapsel zu realisieren.

10. System nach Anspruch 8 oder 9, wobei die Kapsel mindestens ein Dichtelement (25) aufweist, das von dem Flansch (6) vorsteht, der in dem Raum zwischen der Seitenwand (2) der Kapsel und dem vorstehenden Element (10) umfasst ist, wobei letzteres im Wesentlichen an dem Ende des Flansches angeordnet ist, wobei der mindestens eine untere Rand (52) des Gehäuses (50) das mindestens eine Dichtelement (25) berührt, das von dem Flansch vorsteht, um einen dichten Eingriff mit der Kapsel zu realisieren.

## Revendications

1. Capsule (1) pour préparer des boissons, comprenant au moins une paroi latérale (2) ayant une section transversale sensiblement circulaire,
au moins une paroi supérieure (3), pour l'injection d'un liquide en train d'infuser, et au moins une paroi inférieure (4) pour l'écoulement de ladite boisson qui définissent un corps creux (5) pour loger un ou plusieurs ingrédients pour la préparation de ladite boisson, ladite capsule comprenant en outre au moins un axe vertical (A) et au moins une bride (6) ayant une section transversale sensiblement circulaire et s'étendant latéralement à partir de ladite paroi latérale (2) du corps creux (5) de la capsule, ladite au moins une bride étant définie par au moins une surface supérieure (8) et au moins une surface inférieure (7), ladite bride comprenant, au niveau de sa propre extrémité circonférentielle, au moins un élément (10) faisant saillie par rapport à ladite surface supérieure (8) de ladite bride, ledit au moins un élément saillant (10) comprend une surface latérale (11) incidente à ladite surface inférieure (7) de ladite bride, s'étendant de sorte à réduire au moins partiellement sa propre distance (D) de bas en haut par rapport audit axe vertical (A) de la capsule et ledit au moins un élément saillant (10) est doté d'une surface latérale interne (12) qui a une forme différente de la forme de ladite surface latérale externe (11), **caractérisée en ce que** ladite surface latérale interne (12) est incurvée et est dotée d'au moins un point de flexion (13) qui est espacé de la surface supérieure (8) de la bride d'une longueur au moins égale à un quart de la hauteur (H) de ladite partie saillante (10).

2. Capsule selon la revendication 1, **caractérisée en ce que** ladite surface latérale (11) dudit au moins un élément saillant (10) s'étend au moins partiellement sur, ou en dessous de, au moins un plan (P) incident à la surface inférieure (7) de ladite bride et incliné par rapport à un axe vertical (B) perpendiculaire à la surface inférieure (7) de ladite bride et/ou par rapport audit axe vertical (A) de ladite capsule.

3. Capsule selon la revendication 2, dans laquelle ledit au moins un plan (P) est incident à la surface inférieure (7) de ladite bride (6) dans le point d'incidence, ou la région d'incidence, de ladite surface latérale (11) avec ladite surface inférieure (7) de ladite bride.

4. Capsule selon la revendication 2 ou 3, dans laquelle ledit au moins un plan (P), qui est incident à la surface inférieure (7) de ladite bride (6), est incliné par rapport audit axe vertical (B) perpendiculaire à la surface inférieure de ladite bride et/ou par rapport audit axe vertical (A) de ladite capsule, d'un angle (α) compris entre 5° et 50°, de préférence entre 15° et 40°, et de manière davantage préférée entre 20° et 30°.

5. Capsule selon l'une quelconque des revendications 2 à 4, dans laquelle ladite au moins une partie de ladite surface latérale (11) dudit élément saillant (10) s'étendant au moins partiellement sur, ou en dessous de, au moins un plan (P) incident à la surface inférieure (7) de ladite bride (6) et inclinée par rapport à un axe vertical (B) perpendiculaire à la surface inférieure de ladite bride et/ou par rapport audit axe vertical (A) de ladite capsule, est disposée au-dessus de ladite surface supérieure (8) de ladite bride (6) et/ou est espacée de ladite surface inférieure (7) de ladite bride d'une distance (Z) d'au moins 0,1 mm, et de préférence d'au moins 0,2 mm, le long de la direction dudit axe vertical (A) de ladite capsule.

6. Capsule selon la revendication 5, dans laquelle ladite distance (Z) est mesurée à partir du point d'incidence ou de la région d'incidence de ladite surface latérale (11) avec ladite surface inférieure (7) de ladite bride (6).

7. Capsule selon l'une quelconque des revendications précédentes, **caractérisée en ce qu'**elle comprend au moins un élément d'étanchéité (25) faisant saillie à partir de ladite bride, ledit élément d'étanchéité saillant étant compris entre ladite paroi latérale (2) de ladite capsule et ledit élément saillant (10), ce dernier étant disposé sensiblement au niveau de l'extrémité de ladite bride (6).

8. Système pour préparer des boissons, comprenant au moins une capsule (1) selon l'une quelconque des revendications précédentes, et au moins un dispositif d'infusion pour la préparation d'une boisson, comprenant un boîtier (50) pour renfermer au moins une partie de ladite capsule, dans lequel ledit boîtier comprend un bord inférieur (52) approprié pour venir en contact avec ladite bride (6) dans l'espace entre ladite paroi latérale (2) de la capsule et ledit élément (10) faisant saillie à partir de ladite bride (6) afin d'effectuer une mise en prise étanche avec la capsule, ledit boîtier (50) dudit dispositif restant au-dessus de ladite surface latérale (11) dudit élément saillant (10) de ladite capsule incidente à ladite surface inférieure (7) de ladite bride (6) et s'étendant de sorte à réduire au moins partiellement sa distance (D) de bas en haut par rapport audit axe vertical (A) de ladite capsule, et ledit au moins un élément saillant (10) est doté d'une surface latérale interne (12) qui a une forme différente de la forme de ladite surface latérale externe (11), **caractérisé en ce que** ladite surface latérale interne (12) est incurvée et elle est dotée d'au moins un point de flexion (13) qui est espacé de la surface supérieure (8) de la bride d'une longueur au moins partiellement égale à un quart de la hauteur (H) de ladite partie saillante (10).

9. Système selon la revendication 8, dans lequel la surface latérale (11) dudit au moins un élément saillant (10) de ladite capsule s'étend au moins partiellement sur, ou en dessous de, au moins un plan (P) incident à la surface inférieure (7) de ladite bride (6) et incliné par rapport à un axe vertical (B) perpendiculaire à la surface inférieure (7) de ladite bride et/ou par rapport audit axe vertical (A) de ladite capsule, ledit boîtier (50) dudit dispositif d'infusion restant au-dessus dudit au moins un plan (P) incident à la surface inférieure de ladite bride et incliné par rapport à un axe vertical perpendiculaire à la surface inférieure de ladite bride et/ou par rapport audit axe vertical de ladite capsule, lorsque ledit au moins un bord inférieur (52) dudit boîtier (50) entre en contact avec ladite bride (6) dans l'espace entre ladite paroi latérale (2) de la capsule et ledit élément (10) faisant saillie à partir de ladite bride afin d'effectuer une mise en prise étanche avec la capsule.

10. Système selon la revendication 8 ou 9, dans lequel ladite capsule comprend au moins un élément d'étanchéité (25) faisant saillie à partir de ladite bride (6) compris dans l'espace entre ladite paroi latérale (2) de ladite capsule et ledit élément saillant (10), ce dernier étant sensiblement agencé au niveau de l'extrémité de ladite bride, ledit au moins un bord inférieur (52) dudit boîtier (50) entrant en contact avec ledit au moins un élément d'étanchéité (25) faisant saillie à partir de ladite bride afin d'effectuer une mise en prise étanche avec la capsule.
